# EUROPEAN PATENT SPECIFICATION

(11) **EP 3 163 143 B1**
(45) Date of publication and mention of the grant of the patent: **22.08.2018**
(21) Application number: 16275151.5
(22) Date of filing: 07.10.2016
(51) Int. Cl.: F16L 55/11, F16L 55/13, F02B 77/00

(54) **A REMOVABLE PASSAGE CLOSURE PLUG**
ENTFERNBARER VERSCHLUSSSTOPFEN
BOUCHON DE FERMETURE DE PASSAGE AMOVIBLE

(30) Priority: 02.11.2015 GB 201519345
(43) Date of publication of application: 03.05.2017
(73) Proprietor: Ford Global Technologies, LLC, Dearborn, MI 48126 (US)
(72) Inventor: Clark, Stephen, Bedford, Bedfordshire MK40 3GB (GB)
(74) Representative: Dörfler, Thomas

(56) References cited:
- EP-A2- 0 443 720
- DE-A1- 10 220 620
- DE-A1-102006 042 096
- GB-A- 2 223 818
- US-A- 1 369 882

## Description

This invention relates to a closure plug for sealing off an open end of a passage in a component.

It is known from, for example, US Patent 3,952,395 to press fit a solid ball in an open end of a passage and stake the ball in place in order to seal off the open end of the passage.

It is a problem with such approach that it is a relatively time consuming process and requires the use of a special staking tool to performing the staking operation. In addition, such a method is only useable in materials that can be readily staked and so is not feasible with a component manufactured from a brittle material such as, for example, cast iron.

It is further known from, for example, GB Patents 2,223,818 and 1,357,796 to provide cup like plugs in which a ball is pressed in order to secure the plug in a bore. However, both of these patents have the disadvantage that the plug cannot at a later date be easily removed because the outer surface of the plugs have serrations or teeth that dig into the surface of the bore into which the plug is fitted.

Another plug is known from DE 102 20 620. It is an object of this invention to provide a closure plug that is of low cost, easy to use and can, if required, can easily be extracted at a later date from the component to which it is fitted.

According to a first aspect of the invention there is provided a removable closure plug for sealing off an open end of a passage in a component, the closure plug comprising a tubular body made from a soft resilient material and a ball engageable with the tubular body, the tubular body having a smooth outer surface for engagement with a wall of the passage to be sealed, a small diameter bore portion and a large diameter bore portion connected to the small diameter bore portion by a frusto-conical lead-in wherein the entire outer surface of the tubular body is a smooth surface, the ball, the large diameter bore portion and the small diameter bore portion are sized such that the ball forms one of a clearance fit and a transition fit when engaged with the large diameter bore portion of the tubular body and forms an interference fit when engaged with the small diameter bore portion of the tubular body and, when the tubular body is positioned in the passage and the ball is located in the small diameter bore portion of the tubular body, the smooth outer surface of the tubular body forms an interference fit with the wall of the passage.

The tubular body may have an annular end face for reaction against a shoulder formed in the passage so as to restrict excessive inward displacement of the tubular body into the passage during assembly of the closure plug into the passage.

The annular end face may react against the shoulder during insertion of the ball into the small diameter bore portion of the tubular body.

According to a second aspect of the invention there is provided a component and closure plug assembly comprising a component in which a passage having at least one open end is formed therein and a closure plug to seal the at least one open end of the passage to prevent the escape of liquid therefrom wherein the closure plug is a closure plug constructed in accordance with said first aspect of the invention.

The component may be one of a cylinder block of an engine and a cylinder head of an engine and the passage is one of a main oil gallery of the engine and a main coolant gallery of the engine.

That is to say, the component may be a cylinder block of an engine and the passage may be a main oil gallery of the engine, the component may be a cylinder block of an engine and the passage may be a main coolant gallery of the engine, the component may be a cylinder head of an engine and the passage may be a main oil gallery of the engine or the component may be a cylinder head of an engine and the passage may be a main coolant gallery of the engine.

The passage may be a stepped passage having an end portion that is of a larger diameter than a main portion of the passage so as to form a shoulder at a juncture thereof and, when the tubular body is located in the passage, the smooth outer surface of the tubular body forms a push fit with the end portion of the passage prior to insertion of the ball into the small diameter bore portion of the tubular body.

The passage may be a stepped passage having an end portion that is of a larger diameter than a main portion of the passage so as to form a shoulder at a juncture thereof and, when the tubular body is located in the passage, the smooth outer surface of the tubular body forms an interference fit with the end portion of the passage when the ball is located in the small diameter bore portion of the tubular body.

The shoulder may be used to position the closure plug in the passage and to resist the force required to move the ball into the small diameter bore portion of the tubular body during assembly of the closure plug to the component.

According to a third aspect of the invention there is provided a method of assembling a removable closure plug having a tubular body and a ball to a component to form an assembly constructed in accordance with said second aspect of the invention wherein the method comprises inserting the tubular body into the larger diameter portion of the passage until it abuts against the shoulder formed at a juncture between the larger and smaller diameter bore portions of the passage, inserting the ball into the large diameter bore portion of the tubular body and pressing it into engagement with the small diameter bore portion of the tubular body thereby expanding the tubular body to form a seal between the smooth outer surface of the tubular body and the wall of the larger diameter bore portion of the passage.

According to a fourth aspect of the invention there is provided a method for removing a closure plug from an assembly constructed in accordance with said second aspect of the invention, the method comprising threadingly engaging a threaded removal tool with the large diameter bore portion of the soft resilient tubular body of the closure plug and applying an axial force to the threaded removal tool to draw the closure plug out of the passage in the component.

The method may further comprise, prior to removal of the closure plug, producing an internal thread in the large diameter bore portion for engagement by the threaded removal tool.

Engaging a threaded removal tool with the large diameter bore portion of the soft resilient tubular body of the closure plug comprises screwing one of a self tapping bolt and a self tapping screw into the large diameter bore portion of the soft resilient tubular body of the closure plug.

The invention will now be described by way of example with reference to the accompanying drawing of which:-
Fig.1a is a cross-section through a component having a passage that has an open end sealed off by a removable closure plug in accordance with a first aspect of the invention so as to form a component and closure plug assembly in accordance with a second aspect of the invention.
Fig.1b is an enlarged view of the area 'R' shown on Fig.1a;
Fig.2 in a cross-sectional view of the closure plug shown in Fig.1 showing a ball is a pre-sealing position;
Fig.3 is a cross-sectional view of the closure plug shown in Fig.2 showing the ball in a sealing position and the deformation that would occur to a body of the closure plug if not constrained by fitment into a passage; and
Fig.4 is a table describing various mechanical fits.

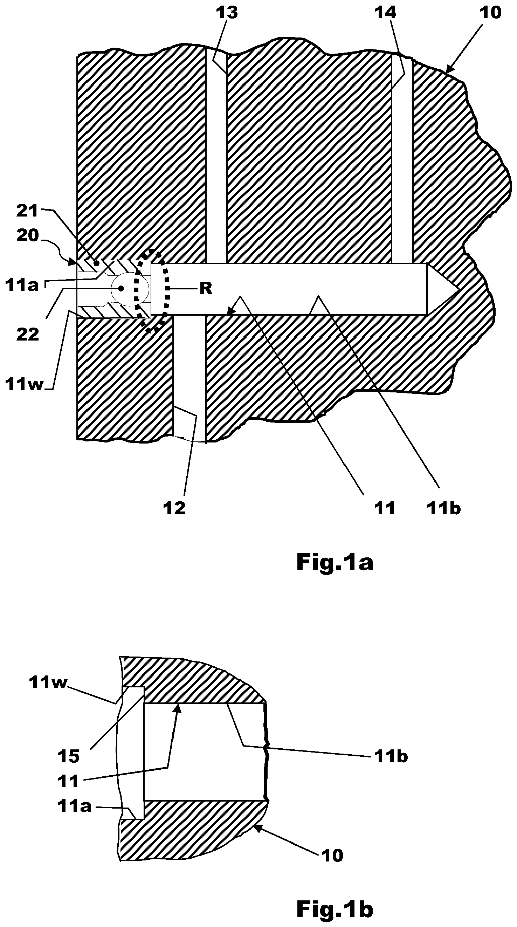

Referring now to Figs. 1a to 3 there is shown a removable closure plug 20 comprising a soft resilient tubular body 21 in which is located a ball 22 that is manufactured from a harder less easily deformed material than the tubular body 21 into which it fitted. The ball 22 can, for example, be in the form of a ball bearing.

The closure plug is shown in Fig.1a fitted into a stepped passage 11 in a component 10. The component 10 in the case of this example is a cast iron cylinder block of an engine and the stepped passage 11 is a main oil gallery of the engine. It will however be appreciated that the closure plug 20 is not limited to such use and can be applied with equal benefit to use with other components and materials.

The closure plug 20 is shown in Fig.1a in a sealing state in which it seals off the otherwise open end of the stepped passage 11.

The passage 11 has an end portion 11a near its open end that is of a larger diameter than a main portion 11b of the stepped passage 11.

The interface or juncture between the end and main portions 11a and 11b of the passage 11 forms an annular face 15 or shoulder (See Fig.1b) used to form a stop for the closure plug 20 as described hereinafter.

The main portion 11b of the stepped passage 11 is shown in the case of this example connecting a main oil feed 12 of the engine to two cylinder head oil feeds 13, 14.

The tubular body 21 of the closure plug 20 is made from a soft resilient deformable material such as, for example and without limitation, an aluminium alloy or mild steel that is sufficiently resilient and deformable to be deformed to form a seal, as will be described hereinafter, but is also sufficiently soft to enable it to be threadingly engaged by a threaded extraction device if the closure plug 20 needs to be removed at a later date.

The tubular body 21 has a smooth outer surface 23 extending between first and second annular end faces 27 and 28 and a stepped bore 24, 25 and 26. The stepped bore comprises a large diameter bore portion 24, a small diameter bore portion 25 and a frusto-conical lead-in portion 26 joining the large diameter bore portion 24 to the small diameter bore portion 25. A chamfer or lead-in 29 is formed between the smooth outer surface 23 of the tubular body 21 and the first end face 27 to assist with insertion of the tubular body 21 into the stepped passage 11.

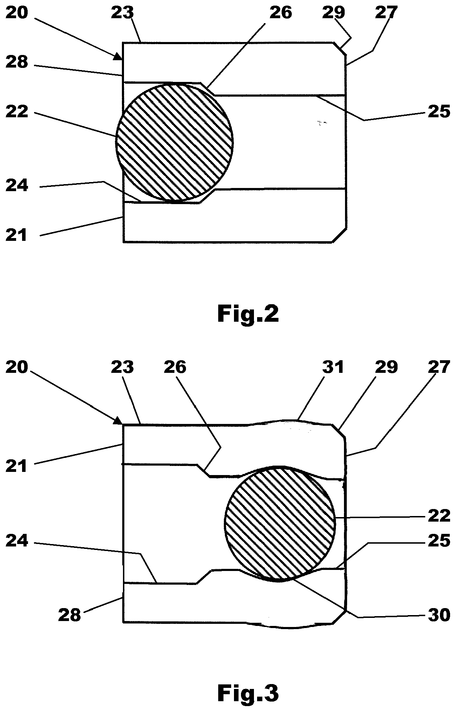

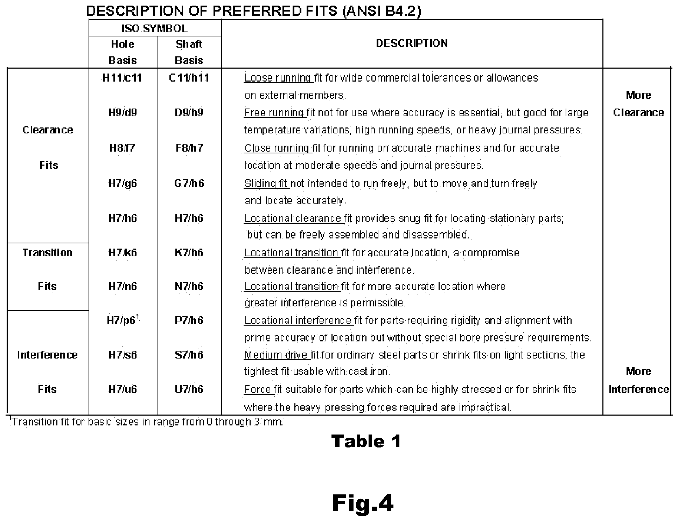

The ball 22 is a push fit or transition fit in the large diameter bore portion 24 of the tubular body 21 and is an interference fit in the small diameter bore portion 25 of the tubular body 21. Table 1 provided in Fig.4 sets out various definitions of the fits used herein. If the ball 22 were to be pressed into the small diameter bore portion 25 before the tubular body 21 is located in the passage 11 in the component 10 then it would cause localised deformation to the tubular body 21 as shown on Fig.3 by a circumferential bulge 30 in the small diameter bore portion 25 where it interacts with the ball 22 and a corresponding a bulge 31 in the outer surface 23.

It will be appreciated that in use this bulging is minimal due to the constraining effect of the passage 11 into which the closure plug 20 is fitted but is sufficient to produce an interference fit between the smooth outer surface 23 of the tubular body 21 a wall 11w of the end portion 11a of the stepped passage 11.

The outer diameter of the tubular body 21 is such that it is a push fit in the end portion 11a of the passage 11 but is larger in diameter than the main portion 11b of the passage 11 and can not pass the step formed in the passage 11 by the shoulder 15 against which the first annular end face 27 abuts in use.

The passage 11 is manufactured in the case of this example by drilling a hole of diameter corresponding to the diameter of the main portion 11b and then counterboring the end of the passage 11 to form the end portion 11a.

When the closure plug 20 is initially pushed into the end portion 11a of the passage 11 the ball 22 is either in the position shown in Fig.2 or has yet to be inserted into the large diameter bore portion 24 of the tubular body 21. The tubular body 21 is then pushed or urged into the larger diameter portion 11a until the end face 27 abuts against the annular face 15 in the passage 11 formed by the change in diameter between the larger and main portions 11a and 11b of the passage 11. To seal off the passage 11, the ball 22 is then pressed into the small diameter bore portion 25 of the tubular body 21 causing the tubular body 21 to locally expand to accommodate the ball 22 in the small diameter bore portion 25 of the tubular body 21 and forms an interference fit between the smooth outer surface 23 of the tubular body 21 and the end portion 11a of the passage 11.

With the ball 22 located in the small diameter bore portion 25 of the tubular body 21 no fluid can leak from the passage 11 due to the interaction between the ball 22 and the small diameter bore portion 25 and the interaction between the smooth outer surface 23 and the end portion 11a of the passage 11. It will be appreciated that the annular face 15 prevents the closure plug 20 from being pushed too far into the passage 11 and provides a stop resisting the force used to press the ball 22 into the small diameter bore portion 25 of the tubular body 21 during assembly.

One of the advantages of the invention is that if at a later date the closure plug 20 needs to be removed from the passage 11 this can easily be achieved by threadingly engaging an extractor with the large diameter bore portion 24 of the tubular body 21. For example, the large diameter bore portion can be tapped to produce an internal thread or a self tapping bolt or screw can be screwed directly into the large diameter bore portion 24. A threaded extraction tool such as a screw or bolt extractor tool can then be used to pull the closure plug 20 out of the passage 11. It will be appreciated that, because the tubular body 21 is made from a relatively soft metal, the tubular body 21 can easily be tapped to provide the internal thread or threadingly engaged by a self tapping bolt or screw.

The method of extracting the closure plug 20 can therefore comprise threadingly engaging a threaded removal tool (not shown) with the large diameter bore portion 24 of the soft resilient tubular body 21 of the closure plug 20 and applying an axial force to the threaded removal tool to draw the closure plug 20 out of the passage 11 in the component 10.

It will be appreciated that prior to removal of the closure plug 20 if a threaded removal tool is to be used it is required to produce an internal thread in the large diameter bore portion 24 for engagement by the threaded removal tool when extracting the closure plug 20.

Alternatively, the step of engaging a threaded removal tool with the large diameter bore portion 24 of the soft resilient tubular body 21 of the closure plug 20 can comprise screwing one of a self tapping bolt and a self tapping screw into the large diameter bore portion 24 of the soft resilient tubular body 21 of the closure plug 20.

It will further be appreciated that the use of a smooth outer surface 23 for the tubular body 21 facilitates such extraction because, if the outer surface were to be serrated or have outwardly projecting teeth, it would likely dig in to the material of the component 10 thereby preventing easy extraction of the closure plug 20.

Therefore in summary, the invention provides an removable closure plug that is positioned in a bore or passage having a shoulder that is used to locate the closure plug and resist the force required for assembly of the closure plug.

A number of advantages are obtained by the use of a closure plug constructed in accordance with this invention firstly, a bore or passage in a material such as aluminium can be sealed using a soft ductile material tubular sleeve and an oversize ball that in combination create an interference fit effecting sealing of the bore or passage.

The closure plug only requires a simple bore with a shoulder to be formed in the component to be sealed. The shoulder is used to resist the forces produced during installation and prevent the closure plug being pushed too far into the bore or passage.

A further advantage of the invention is that a closure plug constructed in accordance with this invention can be used with components made from ductile or brittle materials such as, for example and without limitation, aluminium alloy or cast iron respectively.

The closure plug can be applied to any situation where an end of a passage or bore needs to be sealed in a cost effective simple manner to prevent the escape of liquid such as oil or water. It will however be appreciated that the invention could be applied to prevent the escape of liquids other than oil or water from an open end of a bore or passage and so is not limited to use with oil or water.

It will be appreciated by those skilled in the art that although the invention has been described by way of example with reference to a single embodiment it is not limited to the disclosed embodiment and that one or more alternative embodiments could be constructed without departing from the scope of the invention as defined by the appended claims.

## Claims

1. A removable closure plug (20) for sealing off an open end of a passage (11) in a component (10), the closure plug (20) comprising a tubular body (21) made from a soft resilient material and a ball (22) engageable with the tubular body(21), the tubular body (21) having a smooth outer surface (23) for engagement with a wall (11w) of the passage (11) to be sealed, a small diameter bore portion (25) and a large diameter bore portion (24) connected to the small diameter bore portion (25) by a frusto-conical lead-in (26) **characterised in that** the entire outer surface (23) of the tubular body (21) is a smooth surface, the ball (22), the large diameter bore portion (24) and the small diameter bore portion (25) are sized such that the ball (22) forms one of a clearance fit and a transition fit when engaged with the large diameter bore portion (24) of the tubular body (21) and forms an interference fit when engaged with the small diameter bore portion (25) of the tubular body (21) and that, when the tubular body (21) is positioned in the passage (11) and the ball (22) is located in the small diameter bore portion (25) of the tubular body (21), the smooth outer surface (23) of the tubular body (21) forms an interference fit with the wall (11w) of the passage (11).

2. A plug as claimed in claim 1 wherein the tubular body (21) has an annular end face (27) for reaction against a shoulder (15) formed in the passage (11) so as to restrict excessive inward displacement of the tubular body (21) into the passage (11) during assembly of the closure plug (20) into the passage (11).

3. A plug as claimed in claim 2 wherein the annular end face (27) reacts against the shoulder (15) during insertion of the ball (22) into the small diameter bore portion (25) of the tubular body (21).

4. A component and closure plug assembly comprising a component (10) in which a passage (11) having at least one open end is formed therein and a closure plug to seal the at least one open end of the passage (11) to prevent the escape of liquid therefrom **characterised in that** the closure plug is a closure plug (20) as claimed in any of claims 1 to 3.

5. An assembly as claimed in claim 4 wherein the component is one of a cylinder block of an engine and a cylinder head of an engine and the passage (11) is one of a main oil gallery of the engine and a main coolant gallery of the engine.

6. An assembly as claimed in claim 4 or in claim 5 wherein the passage (11) is a stepped passage having an end portion (11a) that is of a larger diameter than a main portion (11b) of the passage (11) so as to form a shoulder (15) at a juncture thereof and, when the tubular body (21) is located in the passage (11), the smooth outer surface (23) of the tubular body (21) forms a push fit with the end portion (11a) of the passage (11) prior to insertion of the ball (22) into the small diameter bore portion (25) of the tubular body (21).

7. An assembly as claimed in claim 4 or in claim 5 wherein the passage (11) is a stepped passage having an end portion (11a) that is of a larger diameter than a main portion (11b) of the passage (11) so as to form a shoulder (15) at a juncture thereof and, when the tubular body (21) is located in the passage (11), the smooth outer surface (23) of the tubular body (21) forms an interference fit with the end portion (11a) of the passage (11) when the ball (22) is located in the small diameter bore portion (25) of the tubular body (21).

8. An assembly as claimed in claim 6 or in claim 7 wherein the shoulder (15) is used to position the closure plug (20) in the passage (11) and to resist the force required to move the ball (22) into the small diameter bore portion (25) of the tubular body (21) during assembly of the closure plug (20) to the component (10).

9. A method of assembling a removable closure plug (20) having a tubular body (21) and a ball (22) to a component to form an assembly as claimed in any of claims 6 to 8 wherein the method comprises inserting the tubular body (21) into the larger diameter portion (11a) of the passage (11) until it abuts against the shoulder (15) formed at a juncture between the larger and smaller diameter bore portions (11a and 11b) of the passage (11), inserting the ball (22) into the large diameter bore portion (24) of the tubular body (21) and pressing it into engagement with the small diameter bore portion (25) of the tubular body (21) thereby expanding the tubular body (21) to form a seal between the smooth outer surface (23) of the tubular body (21) and the wall (11w) of the larger diameter bore portion (11a) of the passage (11).

10. A method for removing a closure plug (20) from an assembly as claimed in any of claims 4 to 8 **characterised in that** the method comprises threadingly engaging a threaded removal tool with the large diameter bore portion (24) of the soft resilient tubular body (21) of the closure plug (20) and applying an axial force to the threaded removal tool to draw the closure plug (20) out of the passage (11) in the component (10).

11. A method as claimed in claim 10 wherein the method further comprises prior to removal of the closure plug (20) producing an internal thread in the large diameter bore portion (24) for engagement by the threaded removal tool.

12. A method as claimed in claim 10 wherein engaging a threaded removal tool with the large diameter bore portion (24) of the soft resilient tubular body (21) of the closure plug (20) comprises screwing one of a self tapping bolt and a self tapping screw into the large diameter bore portion (24) of the soft resilient tubular body (21) of the closure plug (20).

## Patentansprüche

1. Entfernbarer Verschlussstopfen (20) zum Abdichten eines offenen Endes eines Durchgangs (11) in einem Bauteil (10), wobei der Verschlussstopfen (20) Folgendes umfasst: einen röhrenförmigen Körper (21), der aus einem weichen elastischen Material hergestellt ist, und eine Kugel (22), die in Eingriff mit dem röhrenförmigen Körper (21) gebracht werden kann, wobei der röhrenförmige Körper (21) eine glatte Außenfläche (23) zum Eingriff mit einer Wand (11w) des abzudichtenden Durchgangs (11) aufweist, einen einen kleinen Durchmesser aufweisenden Bohrungsabschnitt (25) und einen einen großen Durchmesser aufweisenden Bohrungsabschnitt (24), der über eine kegelstumpfförmige Zuführung (26) mit dem einen kleinen Durchmesser aufweisenden Bohrungsabschnitt (25) verbunden ist, **dadurch gekennzeichnet, dass** die gesamte Außenfläche (23) des röhrenförmigen Körpers (21) eine glatte Fläche ist, dass die Kugel (22), der einen großen Durchmesser aufweisende Bohrungsabschnitt (24) und der einen kleinen Durchmesser aufweisende Bohrungsabschnitt (25) auf eine solche Weise dimensioniert sind, dass die Kugel (22) bei einem Eingriff mit dem einen großen Durchmesser aufweisenden Bohrungsabschnitt (24) des röhrenförmigen Körpers (21) eine Spielpassung oder eine Übergangspassung bildet und bei einem Eingriff mit dem einen kleinen Durchmesser aufweisenden Bohrungsabschnitt (25) des röhrenförmigen Körpers (21) eine Presspassung bildet, und dass, wenn der röhrenförmige Körper (21) in dem Durchgang (11) positioniert ist und sich die Kugel (22) in dem einen kleinen Durchmesser aufweisenden Bohrungsabschnitt (25) des röhrenförmigen Körpers (21) befindet, die glatte Außenfläche (23) des röhrenförmigen Körpers (21) eine Presspassung mit der Wand (11w) des Durchgangs (11) bildet.

2. Stopfen nach Anspruch 1, wobei der röhrenförmige Körper (21) eine ringförmige Endfläche (27) zur Wirkung gegen eine Schulter (15) aufweist, die in dem Durchgang (11) ausgebildet ist, um eine übermäßige nach innen gerichtete Verschiebung des röhrenförmigen Körpers (21) in den Durchgang (11) zu begrenzen, wenn der Verschlussstopfen (20) in den Durchgang (11) eingebaut wird.

3. Stopfen nach Anspruch 2, wobei die ringförmige Endfläche (27) während dem Einsetzen der Kugel (22) in den einen kleinen Durchmesser aufweisenden Bohrungsabschnitt (25) des röhrenförmigen Körpers (21) gegen die Schulter (15) wirkt.

4. Bauteil-Verschlussstopfen-Anordnung, umfassend ein Bauteil (10), in dem ein wenigstens ein offenes Ende aufweisender Durchgang (11) in demselben ausgebildet ist, und einen Verschlussstopfen, um das wenigstens eine offene Ende des Durchgangs (11) abzudichten, um zu verhindern, dass Flüssigkeit aus demselben entweichen kann, **dadurch gekennzeichnet, dass** es sich bei dem Verschlussstopfen um einen Verschlussstopfen (20) nach einem der Ansprüche 1 bis 3 handelt.

5. Anordnung nach Anspruch 4, wobei es sich bei dem Bauteil um einen Zylinderblock eines Motors oder einen Zylinderkopf eines Motors handelt und es sich bei dem Durchgang (11) um einen Hauptölkanal des Motors oder einen Hauptkühlmittelkanal des Motors handelt.

6. Anordnung nach Anspruch 4 oder Anspruch 5, wobei der Durchgang (11) ein gestufter Durchgang ist, der einen Endabschnitt (11a) aufweist, der einen größeren Durchmesser als ein Hauptabschnitt (11b) des Durchgangs (11) hat, um so an einer Verbindungsstelle derselben eine Schulter (15) zu bilden, und, wenn sich der röhrenförmige Körper (21) in dem Durchgang (11) befindet, die glatte Außenfläche (23) des röhrenförmigen Körpers (21) vor dem Einsetzen der Kugel (22) in den einen kleinen Durchmesser aufweisenden Bohrungsabschnitt (25) des röhrenförmigen Körpers (21) eine Schiebepassung mit dem Endabschnitt (11a) des Durchgangs (11) bildet.

7. Anordnung nach Anspruch 4 oder Anspruch 5, wobei der Durchgang (11) ein gestufter Durchgang ist, der einen Endabschnitt (11a) aufweist, der einen größeren Durchmesser als ein Hauptabschnitt (11b) des Durchgangs (11) hat, um so an einer Verbindungsstelle derselben eine Schulter (15) zu bilden, und, wenn sich der röhrenförmige Körper (21) in dem Durchgang (11) befindet, die glatte Außenfläche (23) des röhrenförmigen Körpers (21) einen Presspassung mit dem Endabschnitt (11a) des Durchgangs (11) bildet, wenn sich die Kugel (22) in dem einen kleinen Durchmesser aufweisenden Bohrungsabschnitt (25) des röhrenförmigen Körpers (21) befindet.

8. Anordnung nach Anspruch 6 oder Anspruch 7, wobei die Schulter (15) dazu dient, den Verschlussstopfen (20) in dem Durchgang (11) zu positionieren und der Kraft zu widerstehen, die erforderlich ist, um die Kugel (22) in den einen kleinen Durchmesser aufweisenden Bohrungsabschnitt (25) des röhrenförmigen Körpers (21) zu bewegen, währen der Verschlussstopfen (20) an dem Bauteil (10) angebaut wird.

9. Verfahren zum Anbauen eines entfernbaren Verschlussstopfens (20), der einen röhrenförmigen Körper (21) und eine Kugel (22) aufweist, an ein Bauteil, um eine Anordnung nach einem der Ansprüche 6 bis 8 zu bilden, wobei das Verfahren Folgendes umfasst: Einsetzen des röhrenförmigen Körpers (21) in den einen größeren Durchmesser aufweisenden Abschnitt (11a) des Durchgangs (11), bis er an der Schulter (15), die an einer Verbindungsstelle zwischen dem einen größeren Durchmesser aufweisenden und dem einen kleineren Durchmesser aufweisenden Abschnitt (11a und 11b) des Durchgangs (11) ausgebildet ist, anliegt, Einsetzen der Kugel (22) in den einen großen Durchmesser aufweisenden Bohrungsabschnitt (24) des röhrenförmigen Körpers (21) und Drücken derselben in einen Eingriff mit dem einen kleinen Durchmesser aufweisenden Bohrungsabschnitt (25) des röhrenförmigen Körpers (21) und dadurch Erweitern des röhrenförmigen Körpers (21), um eine Dichtung zwischen der glatten Außenfläche (23) des röhrenförmigen Körpers (21) und der Wand (11w) des einen größeren Durchmesser aufweisenden Bohrungsabschnitts (11a) des Durchgangs (11) zu bilden.

10. Verfahren zum Entfernen eines Verschlussstopfens (20) aus einer Anordnung nach einem der Ansprüche 4 bis 8, **dadurch gekennzeichnet, dass** das Verfahren Folgendes umfasst: schraubendes Ineingriffbringen eines mit einem Gewinde versehenen Entfernungswerkzeugs mit dem einen großen Durchmesser aufweisenden Bohrungsabschnitt (24) des weichen elastischen röhrenförmigen Körpers (21) des Verschlussstopfens (20) und Ausüben einer axialen Kraft auf das mit einem Gewinde versehene Entfernungswerkzeug, um den Verschlussstopfen (20) aus dem Durchgang (11) in dem Bauteil (10) zu ziehen.

11. Verfahren nach Anspruch 10, wobei das Verfahren ferner vor dem Entfernen des Verschlussstopfens (20) das Herstellen eines Innengewindes in dem einen großen Durchmesser aufweisenden Bohrungsabschnitt (24) zum Eingriff durch das mit einem Gewinde versehenen Entfernungswerkzeug umfasst.

12. Verfahren nach Anspruch 10, wobei das Ineingriffbringen eines mit einem Gewinde versehenen Entfernungswerkzeugs mit dem einen großen Durchmesser aufweisenden Bohrungsabschnitt (24) des weichen elastischen röhrenförmigen Körpers (21) des Verschlussstopfens (20) das Einschrauben eines selbstschneidenden Bolzens oder einer selbstschneidenden Schraube in den einen großen Durchmesser aufweisenden Bohrungsabschnitt (24) des weichen elastischen röhrenförmigen Körpers (21) des Verschlussstopfens (20) umfasst.

## Revendications

1. Bouchon de fermeture (20) amovible pour obturer une extrémité ouverte d'un passage (11) dans un composant (10), le bouchon de fermeture (20) comprenant un corps tubulaire (21) fait d'un matériau élastique souple et une bille (22) pouvant venir en prise avec le corps tubulaire (21), le corps tubulaire (21) ayant une surface externe (23) lisse pour venir en prise avec une paroi (11w) du passage (11) à obturer, une partie d'alésage de petit diamètre (25) et une partie d'alésage de grand diamètre (24) reliée à la partie d'alésage de petit diamètre (25) par une entrée tronconique (26), **caractérisé en ce que** toute la surface externe (23) du corps tubulaire (21) est une surface lisse, la bille (22), la partie d'alésage de grand diamètre (24) et la partie d'alésage de petit diamètre (25) sont dimensionnées de sorte que la bille (22) forme un ajustement avec jeu ou un ajustement de transition lorsqu'elle vient en prise avec la partie d'alésage de grand diamètre (24) du corps tubulaire (21) et forme un ajustement serré lorsqu'elle vient en prise avec la partie d'alésage de petit diamètre (25) du corps tubulaire (21) et que, lorsque le corps tubulaire (21) est positionné dans le passage (11) et que la bille (22) est située dans la partie d'alésage de petit diamètre (25) du corps tubulaire (21), la surface externe (23) lisse du corps tubulaire (21) forme un ajustement serré avec la paroi (11w) du passage (11).

2. Bouchon selon la revendication 1, le corps tubulaire (21) ayant une face d'extrémité annulaire (27) pour réagir contre un épaulement (15) formé dans le passage (11) de sorte à limiter le déplacement excessif vers l'intérieur du corps tubulaire (21) dans le passage (11) pendant l'assemblage du bouchon de fermeture (20) dans le passage (11).

3. Bouchon selon la revendication 2, la face d'extrémité annulaire (27) réagissant contre l'épaulement (15) pendant l'insertion de la bille (22) dans la partie d'alésage de petit diamètre (25) du corps tubulaire (21).

4. Ensemble composant et bouchon de fermeture comprenant un composant (10) dans lequel est formé un passage (11) ayant au moins une extrémité ouverte et un bouchon de fermeture pour obturer l'au moins une extrémité ouverte du passage (11) pour empêcher du liquide d'en sortir, **caractérisé en ce que** le bouchon de fermeture est un bouchon de fermeture (20) selon l'une quelconque des revendications 1 à 3.

5. Ensemble selon la revendication 4, le composant étant un bloc-cylindres d'un moteur et une culasse d'un moteur et le passage (11) étant une galerie principale d'huile du moteur ou une galerie principale de liquide de refroidissement du moteur.

6. Ensemble selon la revendication 4 ou 5, le passage (11) étant un passage étagé ayant une partie d'extrémité (11a) qui est d'un diamètre plus grand qu'une partie principale (11b) du passage (11) de sorte à former un épaulement (15) à une jonction de celui-ci et, lorsque le corps tubulaire (21) est situé dans le passage (11), la surface externe (23) lisse du corps tubulaire (21) formant un ajustement légèrement dur avec la partie d'extrémité (11a) du passage (11) avant l'insertion de la bille (22) dans la partie d'alésage de petit diamètre (25) du corps tubulaire (21).

7. Ensemble selon la revendication 4 ou 5, le passage (11) étant un passage étagé ayant une partie d'extrémité (11a) qui a un diamètre plus grand qu'une partie principale (11b) du passage (11) de sorte à former un épaulement (15) à un point de jonction de celui-ci et, lorsque le corps tubulaire (21) est situé dans le passage (11), la surface externe (23) lisse du corps tubulaire (21) formant un ajustement serré avec la partie d'extrémité (11a) du passage (11) lorsque la bille (22) est située dans la partie d'alésage de petit diamètre (25) du corps tubulaire (21).

8. Ensemble selon la revendication 6 ou 7, l'épaulement (15) étant utilisé pour positionner le bouchon de fermeture (20) dans le passage (11) et pour résister à la force nécessaire pour déplacer la bille (22) dans la partie d'alésage de petit diamètre (25) du corps tubulaire (21) pendant l'assemblage du bouchon de fermeture (20) sur le composant (10).

9. Procédé d'assemblage d'un bouchon de fermeture (20) amovible ayant un corps tubulaire (21) et une bille (22) sur un composant pour former un ensemble selon l'une quelconque des revendications 6 à 8, le procédé comprenant les étapes consistant à insérer le corps tubulaire (21) dans la partie de plus grand diamètre (11a) du passage (11) jusqu'à ce qu'il s'appuie contre l'épaulement (15) formé à une jonction entre les parties de plus grand et de plus petit diamètre (11a et 11b) du passage (11), à insérer la bille (22) dans la partie d'alésage de grand diamètre (24) du corps tubulaire (21) et à la presser en prise avec la partie d'alésage de petit diamètre (25) du corps tubulaire (21), déployant ainsi le corps tubulaire (21) pour former un joint d'étanchéité entre la surface externe (23) lisse du corps tubulaire (21) et la paroi (11w) de la partie d'alésage de plus grand diamètre (11a) du passage (11).

10. Procédé de retrait d'un bouchon de fermeture (20) d'un ensemble selon l'une quelconque des revendications 4 à 8, **caractérisé en ce que** le procédé comprend les étapes consistant à mettre en prise de façon filetée un outil de retrait fileté avec la partie d'alésage de grand diamètre (24) du corps tubulaire (21) élastique souple du bouchon de fermeture (20) et à appliquer une force axiale à l'outil de retrait fileté pour tirer le bouchon de fermeture (20) hors du passage (11) dans le composant (10) .

11. Procédé selon la revendication 10, le procédé comprenant en outre, avant le retrait du bouchon de fermeture (20), l'étape consistant à produire un filet interne dans la partie d'alésage de grand diamètre (24) pour mise en prise par l'outil de retrait fileté.

12. Procédé selon la revendication 10, la mise en prise d'un outil de retrait fileté avec la partie d'alésage de grand diamètre (24) du corps tubulaire (21) élastique souple du bouchon de fermeture (20) comprenant l'étape consistant à visser un boulon autotaraudant et une vis autotaraudante dans la partie d'alésage de grand diamètre (24) du corps tubulaire (21) élastique souple du bouchon de fermeture (20).
